# EUROPEAN PATENT APPLICATION

(11) **EP 3 663 151 A1**
(43) Date of publication of application: **10.06.2020**
(21) Application number: 19210160.8
(22) Date of filing: 19.11.2019
(51) Int. Cl.: B60W 10/02, B60W 10/08, B60W 20/15, B60W 20/40, B60K 6/365, B60K 6/387, B60K 6/442, B60K 6/445, B60W 30/18

(54) **HYBRID VEHICLE CONTROL SYSTEM**

(30) Priority: 03.12.2018 JP 2018226590
(71) Applicant: TOYOTA JIDOSHA KABUSHIKI KAISHA, Toyota-shi, Aichi-ken, 471-8571 (JP)
(72) Inventor: ENDO, Takahito, Aichi-ken, 471-8571 (JP); IMAMURA, Tatsuya, Aichi-ken, 471-8571 (JP); EBUCHI, Hiroaki, Aichi-ken, 471-8571 (JP)
(74) Representative: J A Kemp LLP

(57) **Abstract**

Provided is a hybrid vehicle control system, the hybrid vehicle control system including: a differential mechanism (PL1); an engine (2); a first motor (8); a driving wheel (3); a second motor (4); an engaging mechanism; a selector that selects neutral in which torque transmission from the engine (2) to the driving wheel (3) through the differential mechanism (PL1) is interrupted; and an electronic control unit. The electronic control unit is configured to set either mechanical neutral or electrical neutral when the neutral is selected, and to set the mechanical neutral when the neutral is selected while the speed of the engine (2) is equal to or lower than a predetermined speed.

## Description

### BACKGROUND OF THE INVENTION

### 1. Field of the Invention

The present invention relates to a hybrid vehicle control system equipped with an engine and a motor as drive power sources.

### 2. Description of Related Art

Japanese Patent No. 6359875 describes a hybrid vehicle control system including: a differential mechanism having rotating elements to which an engine, a first motor, and an output shaft are respectively coupled; a stepped transmission mechanism to which an output shaft of the differential mechanism is coupled; and a second motor coupled to the output shaft of the differential mechanism so as to allow torque transmission. When a hybrid vehicle is traveling with driving torque output from the engine and the driver operates the shift lever to select neutral, the engine speed may increase due to a delay in reducing engine power in response to the shift to neutral. To avoid this, the above hybrid vehicle control system is configured to execute, immediately after a shift to neutral, mechanical neutral control of interrupting torque transmission between the output shaft of the differential mechanism and the driving wheels by disengaging a clutch mechanism provided in the stepped transmission mechanism, and to execute, when a predetermined time has elapsed since the shift to neutral, electrical neutral control of interrupting engine torque transmission through the differential mechanism by stopping a current to the first motor. The mechanical neutral control is configured to maintain the engine speed, the rotational speed of the first motor, and the rotational speed of the second motor (the rotational speed of the output shaft) at their respective speeds at the time of the shift to neutral.

### SUMMARY OF THE INVENTION

To avoid a sudden increase in engine speed immediately after a shift to neutral due to a delay in reducing the engine power in response, the control system described in Japanese Patent No. 6359875 is configured to mechanically interrupt torque transmission between the engine and the driving wheels when the engine power may not be reduced. This control system executes the electrical neutral control when the shift position is changed to the neutral position while the vehicle is traveling in an EV travel mode in which the engine is stopped and driving torque is output from the second motor alone. The electrical neutral control involves interrupting torque transmission between the engine and the driving wheels by stopping a current to the first motor and idling the first motor, which causes the first motor and the rotating elements of the differential mechanism to rotate at speeds according to the vehicle speed (or the vehicle wheel speed) and the gear ratio in the differential mechanism. However, when the vehicle wheel speed increases, such as when the vehicle is traveling on a downhill under the electrical neutral control, the rotational speeds of the first motor and the pinion gear constituting part of the differential mechanism increase gradually with the vehicle wheel speed. If the rotational speeds of the first motor, the pinion gear, etc. increase excessively, the durability of these first motor, pinion gear, etc. may decrease, or power loss incurred while the vehicle travels in neutral may increase.

The present invention provides a hybrid vehicle control system that can reduce the power loss incurred while the vehicle travels in neutral.

A hybrid vehicle control system according to an aspect of the present invention includes: a differential mechanism having at least three rotating elements of a first rotating element, a second rotating element, and a third rotating element, the three rotating elements being configured to differentially rotate; an engine coupled to the first rotating element so as to allow torque transmission; a first motor coupled to the second rotating element so as to allow torque transmission; a driving wheel coupled to the third rotating element so as to allow torque transmission; a second motor coupled to the driving wheel or another driving wheel different from the driving wheel so as to allow torque transmission; an engaging mechanism configured to selectively interrupting torque transmission from the engine to the driving wheel through the differential mechanism; a selector that selects neutral in which torque transmission from the engine to the driving wheel through the differential mechanism is interrupted; and an electronic control unit configured to control the first motor, the second motor, and the engaging mechanism. The electronic control unit is configured to, when the neutral is selected, set either mechanical neutral in which the engaging mechanism is disengaged or electrical neutral in which a current to the first motor is stopped while the engaging mechanism is engaged. The electronic control unit is configured to set the mechanical neutral when the neutral is selected while the speed of the engine is equal to or lower than a predetermined speed.

In the hybrid vehicle control system according to the above aspect, the predetermined speed may include a zero speed.

In the hybrid vehicle control system according to the above aspect, the predetermined speed may include an autonomous revolution speed.

In the hybrid vehicle control system according to the above aspect, the electronic control unit may be configured to detect the vehicle speed when the neutral is selected. The electronic control unit may be configured to set the mechanical neutral when the detected vehicle speed is equal to or higher than a first predetermined vehicle speed. The electronic control unit may be configured to set the electrical neutral when the detected vehicle speed is lower than the first predetermined vehicle speed.

In the hybrid vehicle control system according to the above aspect, the engaging mechanism may be configured to engage a first rotating member and a second rotating member configured to rotate relative to the first rotating member with each other to create an engaged state that allows torque transmission from the engine to the driving wheel through the differential mechanism. The electronic control unit may be configured to detect that a rotational speed difference between the first rotating member and the second rotating member while the mechanical neutral is set is equal to or larger than a predetermined difference, and when the rotational speed difference between the first rotating member and the second rotating member is equal to or larger than the predetermined difference, execute first synchronization control of controlling the rotational speed of the first motor such that the rotational speed difference between the first rotating member and the second rotating member becomes smaller than the predetermined difference.

In the hybrid vehicle control system according to the above aspect, the electronic control unit may be configured to execute the first synchronization control when a driver operates an accelerator.

In the hybrid vehicle control system according to the above aspect, the electronic control unit may be configured to execute the first synchronization control based on an amount of change in a vehicle speed.

In the hybrid vehicle control system according to the above aspect, the differential mechanism may include: a first differential mechanism including two rotating elements of the first rotating element, the second rotating element, and the third rotating element, and a first coupling element; a second differential mechanism including one rotating element other than the two rotating elements of the first rotating element, the second rotating element, and the third rotating element, a second coupling element coupled to the first coupling element, and another rotating element; and the engaging mechanism including a first engaging mechanism and a second engaging mechanism, the first engaging mechanism being configured to selectively couple together one of the two rotating elements in the first differential mechanism and the other rotating element in the second differential mechanism and the second engaging mechanism being configured to selectively couple together any two rotating elements of the second differential mechanism. The mechanical neutral may be set as the first engaging mechanism and the second engaging mechanism are disengaged.

In the hybrid vehicle control system according to the above aspect, the electronic control unit may be configured to set either a first HV travel mode in which the first engaging mechanism is engaged and the second engaging mechanism is disengaged, or a second HV travel mode in which the first engaging mechanism is disengaged and the second engaging mechanism is engaged. The electronic control unit may be configured to have different speed reduction ratios in the first HV travel mode and the second HV travel mode, the speed reduction ratio being a ratio of the speed of the engine to the rotational speed of the driving wheel in a state where rotation of the first motor is stopped. The electronic control unit may be configured to detect that the vehicle speed while the mechanical neutral is set is equal to or higher than a second predetermined vehicle speed. The electronic control unit may be configured to, when the vehicle speed is equal to or higher than the second predetermined vehicle speed, execute second synchronization control of controlling the rotational speed of the first motor such that a rotational speed difference between two rotating elements, engaged by one of the first engaging mechanism and the second engaging mechanism that is engaged to set one of the first HV travel mode and the second HV travel mode in which the speed reduction ratio is lower, becomes smaller than a second predetermined rotational speed. The electronic control unit may be configured to detect that the vehicle speed while the mechanical neutral is set is lower than a third predetermined vehicle speed that is lower than the second predetermined vehicle speed. The electronic control unit may be configured to, when the vehicle speed is lower than the third predetermined vehicle speed, execute third synchronization control of controlling the rotational speed of the first motor such that a rotational speed difference between two rotating elements, engaged by the other one of the first engaging mechanism and the second engaging mechanism that is engaged to set the other one of the first HV travel mode and the second HV travel mode, becomes equal to or smaller than a third predetermined rotational speed.

In the hybrid vehicle control system according to the above aspect, the electronic control unit may be configured to execute either the second synchronization control or the third synchronization control when a driver operates an accelerator.

When neutral in which torque transmission from the engine to the driving wheels through the differential mechanism is selectively interrupted is selected while the engine speed is equal to or lower than a predetermined speed, the control system configured as has been described above sets the mechanical neutral in which the engaging mechanism is disengaged. Thus, it is possible to restrain the first motor and the rotating members composing the differential mechanism from rotating excessively, and to avoid a decrease in durability of these first motor and rotating members. Moreover, power loss due to corotation of the first motor can be reduced. In other words, generation of braking torque that is not needed for the vehicle traveling in neutral can be avoided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view showing an example of a hybrid vehicle to which the present invention can be applied;
FIG. 2A and FIG. 2B are a schematic view illustrating configurations of a clutch mechanism;
FIG. 3 is a skeleton diagram illustrating a first specific example of the hybrid vehicle to which the present invention can be applied;
FIG. 4 is a skeleton diagram illustrating a second specific example of the hybrid vehicle to which the present invention can be applied;
FIG. 5 is a skeleton diagram illustrating a third specific example of the hybrid vehicle to which the present invention can be applied;
FIG. 6 is a skeleton diagram illustrating a fourth specific example of the hybrid vehicle to which the present invention can be applied;
FIG. 7 is an alignment chart illustrating rotational speeds of rotating elements and a pinion gear of a power split device when the hybrid vehicle of the first specific example is set to mechanical neutral;
FIG. 8 is an alignment chart illustrating rotational speeds of the rotating elements and the pinion gear of the power split device when the hybrid vehicle of the second specific example is set to the mechanical neutral;
FIG. 9 is an alignment chart illustrating rotational speeds of the rotating elements and the pinion gear of the power split device when the hybrid vehicle of the third specific example is set to the mechanical neutral;
FIG. 10 is an alignment chart illustrating rotational speeds of the rotating elements and the pinion gear of the power split device when the hybrid vehicle of the fourth specific example is set to the mechanical neutral;
FIG. 11 is a flowchart illustrating an example of control executed by a control system in an embodiment of the present invention;
FIG. 12 is a time chart showing whether or not the clutch mechanism is engaged, changes in rotational speed difference between rotating members on one side and the other side of the clutch mechanism, and changes in rotational speed of the first motor, when neutral is selected while the vehicle is traveling in an EV mode and the vehicle accelerates by traveling on a downhill;
FIG. 13 is a time chart showing whether or not the clutch mechanism is engaged, changes in rotational speed difference between rotating members on one side and the other side of the clutch mechanism, and changes in rotational speed of the first motor, when neutral is selected while the vehicle is traveling in the EV mode and the vehicle travels by inertia at low speed;
FIG. 14 is a time chart showing whether or not the clutch mechanism is engaged, changes in rotational speed difference between rotating members on one side and the other side of the clutch mechanism, changes in rotational speed of the first motor, and changes in accelerator operation amount, when neutral is selected while the vehicle is traveling in the EV mode and then an accelerator is operated;
FIG. 15 is a schematic view illustrating another example of the configuration of a hybrid vehicle to which the present invention can be applied;
FIG. 16 is a skeleton diagram showing a specific example of the hybrid vehicle shown in FIG. 15;
FIG. 17 is a view illustrating an example of a map that is referred to for setting a travel mode;
FIG. 18 is an alignment chart illustrating rotational speeds of rotating elements and a pinion gear of a power split device when electrical neutral is set while a second clutch mechanism is engaged;
FIG. 19 is an alignment chart illustrating rotational speeds of the rotating elements and the pinion gear of the power split device when the electrical neutral is set while a first clutch mechanism is engaged;
FIG. 20 is a flowchart illustrating another example of control executed by the control system in the embodiment of the present invention; and
FIG. 21 is a time chart showing whether or not the clutch mechanisms are engaged, changes in rotational speed difference between rotating members composing each clutch mechanism, and changes in rotational speed of the first motor, when the example of control shown in FIG. 20 is executed.

### DETAILED DESCRIPTION OF EMBODIMENTS

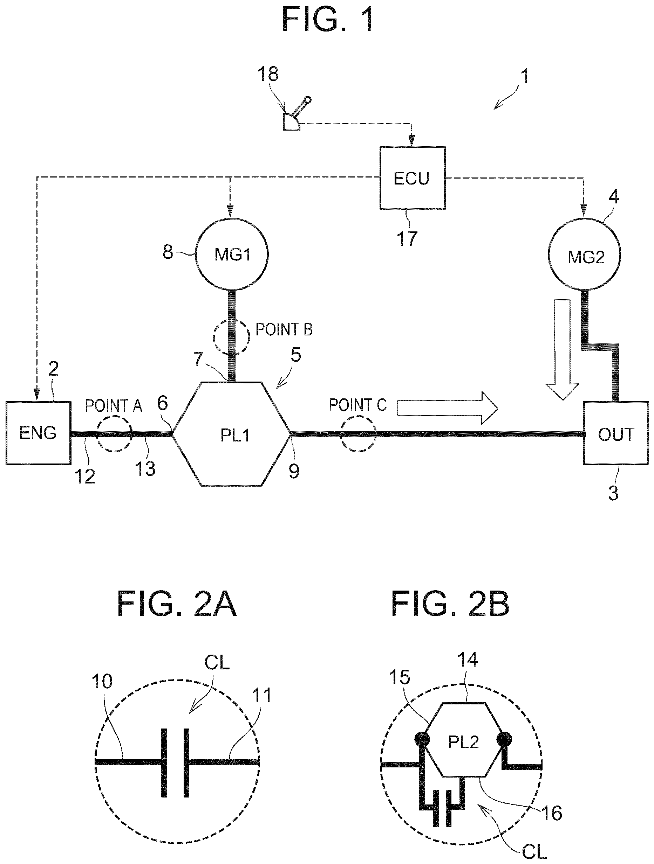

FIG. 1 is a schematic view illustrating an example of a hybrid vehicle to which the present invention can be applied. A hybrid vehicle 1 shown in FIG. 1 can convert part of power output from an engine (ENG) 2 into electricity while transmitting the rest of the power to driving wheels 3, as well as can transmit power output from a second motor (MG2) 4, to be described later, to the driving wheels (OUT) 3. The hybrid vehicle 1 is a so-called series-parallel hybrid vehicle, and is equipped with a power split device 5 that divides torque of the engine 2.

The power split device 5 is a differential mechanism (PL1), such as a single-pinion planetary gear mechanism or a double-pinion planetary gear mechanism, that is configured such that three rotating elements make differential rotation, and the engine 2 is coupled to a first rotating element 6 that is one of these rotating elements so as to allow torque transmission. The engine 2 may be any type of conventionally known engine, such as a gasoline engine or a diesel engine. Between the engine 2 and the first rotating element 6, a torque converter, a damper mechanism, etc. may be provided, or a transmission composed of a gear pair etc. may be provided.

A first motor (MG1) 8 is coupled to a second rotating element 7 that is one of the three rotating elements of the power split device 5 other than the first rotating element 6. The first motor 8 is configured to output a reaction force for outputting engine torque through the power split device 5, and can be formed by a conventionally known motor having an electricity generating function, such as a permanent-magnet synchronous motor or an induction motor.

A third rotating element 9 that is yet another of the three rotating elements of the power split device 5 other than the first rotating element 6 and the second rotating element 7 is coupled to the driving wheels 3 so as to allow torque transmission. The third rotating element 9 may be coupled to the driving wheels 3 through a plurality of gear pairs, or may be configured to be coupled through a propeller shaft or the like to other driving wheels (not shown) that are provided on the opposite side of the power split device 5 in a front-rear direction of the hybrid vehicle 1.

The hybrid vehicle 1 outputs reaction force torque from the first motor 8 to transmit engine torque to the driving wheels 3. In other words, when the first motor 8 does not output reaction force torque, the first motor 8 idles and no engine torque is transmitted to the driving wheels 3, which means the hybrid vehicle 1 is in so-called neutral. Neutral in which torque transmission between the engine 2 and the driving wheels 3 is interrupted by the first motor 8 not outputting reaction force torque corresponds to the "electrical neutral" in the embodiment of the present invention.

When the first motor 8 outputs reaction force torque as described above, the rotational speed of the first motor 8 is controlled so as to maintain the engine speed at a target speed. The reaction force torque output from the first motor 8 is output either in a direction in which the rotational speed of the first motor 8 decreases, or in a direction in which the rotational speed of the first motor 8 increases. When the reaction force torque is output in the direction in which the rotational speed of the first motor 8 decreases, the first motor 8 functions as a power generator and part of power from the engine 2 is converted into electricity by the first motor 8. Conversely, when the reaction force torque is output in the direction in which the rotational speed of the first motor 8 increases, the first motor 8 functions as a motor and power from the first motor 8 adds to power from the engine 2.

The hybrid vehicle 1 is provided with the second motor 4 that outputs power by being supplied with electricity generated by the first motor 8 or electricity from an electricity storage device (not shown). As with the first motor 8, the second motor 4 can be formed by a conventionally known motor having an electricity generating function, such as a permanent-magnet synchronous motor or an induction motor. When the first motor 8 functions as a motor, the second motor 4 functioning as a power generator can convert excess power into electricity.

The second motor 4 can be coupled to the driving wheels (e.g., front wheels) 3 to which power is transmitted from the engine 2 through the power split device 5, or to other driving wheels (e.g., rear wheels; not shown) different from the driving wheels 3. In the example shown in FIG. 1, the second motor 4 is coupled to the same driving wheels 3 as the driving wheels 3 to which power is transmitted from the engine 2.

Moreover, the hybrid vehicle 1 shown in FIG. 1 is configured to be able to mechanically interrupt torque transmission from the engine 2 to the driving wheels 3 through the power split device 5. Specifically, a clutch mechanism CL is provided at one of a point between the engine 2 and the first rotating element 6 (point A), a point between the first motor 8 and the second rotating element 7 (point B), and a point between the driving wheels 3 and the third rotating element 9 (point C).

As shown in FIG. 2A, the clutch mechanism CL can be formed by a conventionally known clutch mechanism, such as a friction clutch mechanism or a dog clutch mechanism, that selectively couples together two rotating members 10, 11. The configuration of the clutch mechanism CL is not limited to a configuration in which an output shaft 12 of the engine 2 and an input shaft 13 coupled to the first rotating element 6 are selectively coupled together as at point A in FIG. 1, but may also be a configuration in which another planetary gear mechanism (PL2) 14 and any two rotating elements 15, 16 of the planetary gear mechanism 14 are selectively coupled together as shown in FIG. 2B. In short, any configuration may be adopted in which the clutch mechanism CL can mechanically uncouple one of the engine 2, the first motor 8, and the driving wheels 3 and the power split device 5 from each other. Neutral in which torque transmission between the engine 2 and the driving wheels 3 is interrupted by disengaging the clutch mechanism CL corresponds to the "mechanical neutral" in the embodiment of the present invention.

The hybrid vehicle 1 is provided with an electronic control unit (hereinafter written as an "ECU," which may be called a controller, for example) 17 that controls the engine 2, the motors 4, 8, and the clutch mechanism CL. The main component of the ECU 17 is a microcomputer. The ECU 17 is configured to receive signals input from sensors that detect the engine speed, the rotational speeds of the first motor 8 and the second motor 4, the vehicle speed, and a shift position selected through operation of a shift lever 18; to determine, based on these input signals and a calculation formula, a map, or the like stored in advance, output torque of the engine 2 and the motors 4, 8, a target speed of the engine 2, whether to engage or disengage the clutch mechanism CL, etc.; and to output the determination results as signals to the engine 2, the motors 4, 8, and the clutch mechanism CL.

The hybrid vehicle 1 configured as has been described above can be set to an HV travel mode in which driving torque is output from the engine 2 and reaction force torque is output from the first motor 8, and torque according to the difference between required driving torque and torque transmitted from the power split device 5 to the driving wheels 3 is output from the second motor 4, and to an EV travel mode in which no driving torque is output from the engine 2 and the first motor 8, and driving torque is output from the second motor 4. (The ECU 17 is configured to set either the HV travel mode or the EV travel mode.) Moreover, the hybrid vehicle 1 configured as has been described above can be set to two modes of neutral in which torque transmission from the engine 2 to the driving wheels 3 is interrupted: the electrical neutral in which torque transmission between the engine 2 and the driving wheels 3 through the power split device 5 is interrupted by interrupting a current to the first motor 8 such that no reaction force torque is output from the first motor 8; and the mechanical neutral in which torque transmission between one of the engine 2, the first motor 8, and the driving wheels 3 and the power split device 5 is mechanically interrupted by disengaging the clutch mechanism CL. (The ECU 17 is configured to set either the electrical neutral or the mechanical neutral.)

The travel mode is selected as the shift lever 18 is shifted to the drive position, and either the HV travel mode or the EV travel mode is selected according to the vehicle speed, required drive power, the amount of electricity remaining in the electricity storage device, or the like at the time of the shift. When the shift lever 18 is shifted to the neutral position, either the mechanical neutral mode or the electrical neutral mode is selected in accordance with an example of control to be described later. Thus, the shift lever 18 corresponds to the "selector" in the embodiment of the present invention. In another configuration, a switch, instead of the shift lever 18, may be manipulated to select the travel mode as well as to select the neutral.

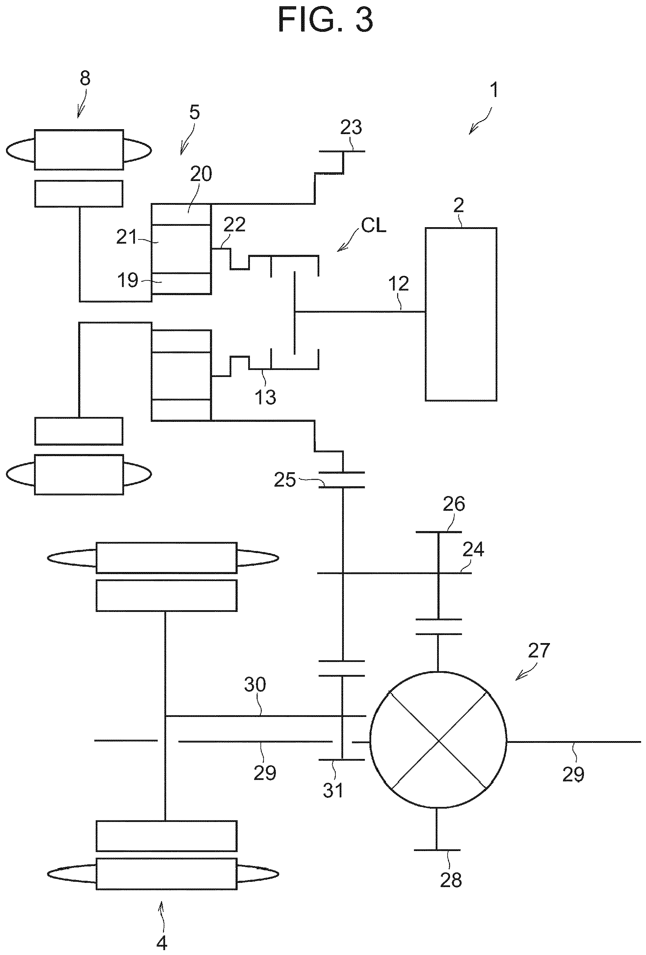

FIG. 3 to FIG. 6 are skeleton diagrams illustrating specific examples of the hybrid vehicle 1 configured as has been described above. In the examples shown in FIG. 3 to FIG. 5, the power split device 5 is formed by a single-pinion planetary gear mechanism. Specifically, the power split device 5 is composed of: a sun gear 19; a ring gear 20 disposed concentrically with the sun gear 19 and having internal teeth; a plurality of pinion gears 21 meshing with the sun gear 19 and the ring gear 20 and disposed at predetermined intervals in a rotation direction of the sun gear 19; and a carrier 22 retaining the pinion gears 21 so as to allow each pinion gear 21 to rotate as well as to revolve while maintaining a pitch between the pinion gears 21.

The engine 2 is coupled to the carrier 22 so as to allow torque transmission, and the first motor 8 is coupled to the sun gear 19 so as to allow torque transmission. Moreover, an output gear 23 formed by an external gear is coupled to the ring gear 20 so as to transmit torque.

A counter shaft 24 is disposed parallel to the output shaft 12 of the engine 2. A driven gear 25 meshing with the output gear 23 is mounted at one end of the counter shaft 24, and a drive gear 26 is mounted at the other end. A ring gear 28 of a differential gear unit 27 meshes with the drive gear 26, and right and left drive shafts 29 are coupled to the differential gear unit 27. The driving wheels 3 are coupled to the drive shafts 29.

The second motor 4 is disposed such that an output shaft 30 of the second motor 4 is parallel to the output shaft 12 of the engine 2 and the counter shaft 24, and an output gear 31 meshing with the driven gear 25 is mounted at an end of the output shaft 30.

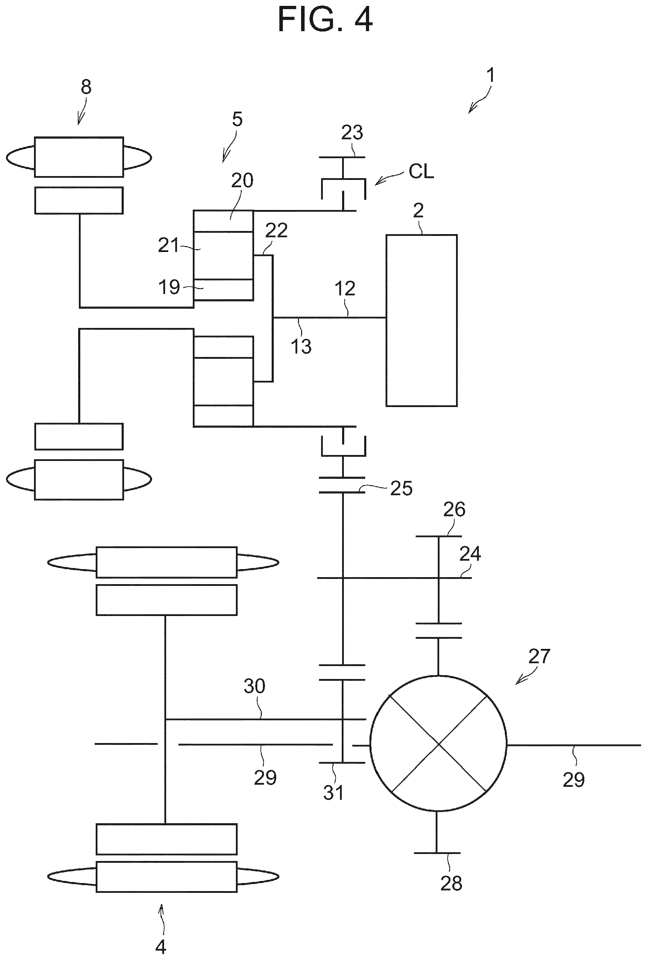

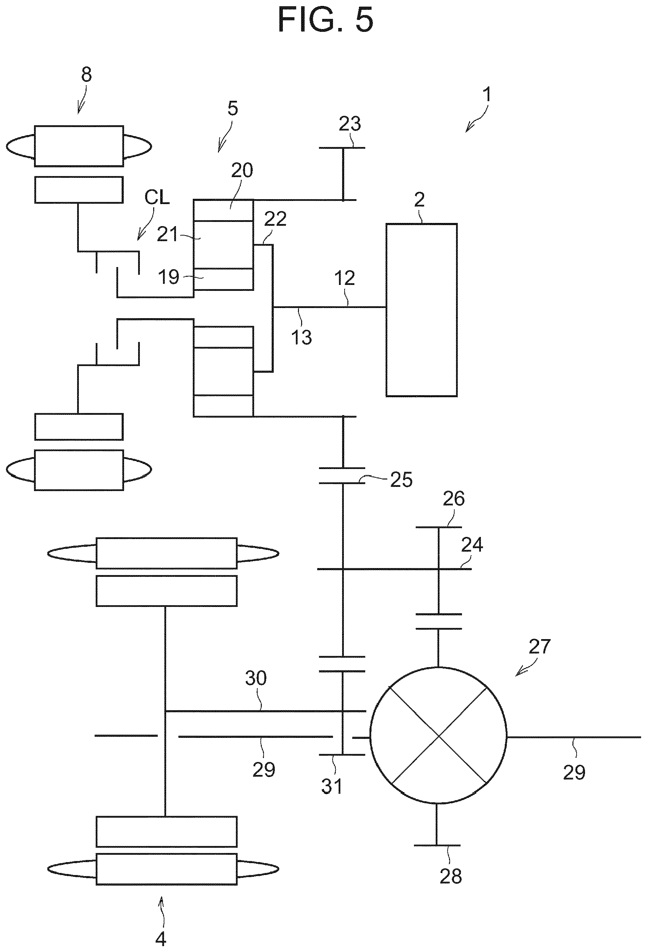

In the first specific example shown in FIG. 3, the clutch mechanism CL is provided so as to be able to selectively interrupt torque transmission between the output shaft 12 of the engine 2 and the input shaft 13 coupled to the carrier 22. In the second specific example shown in FIG. 4, the clutch mechanism CL is provided so as to be able to selectively interrupt torque transmission between the sun gear 19 and the first motor 8. In the third specific example shown in FIG. 5, the clutch mechanism CL is provided so as to be able to selectively interrupt torque transmission between the ring gear 20 and the output gear 23.

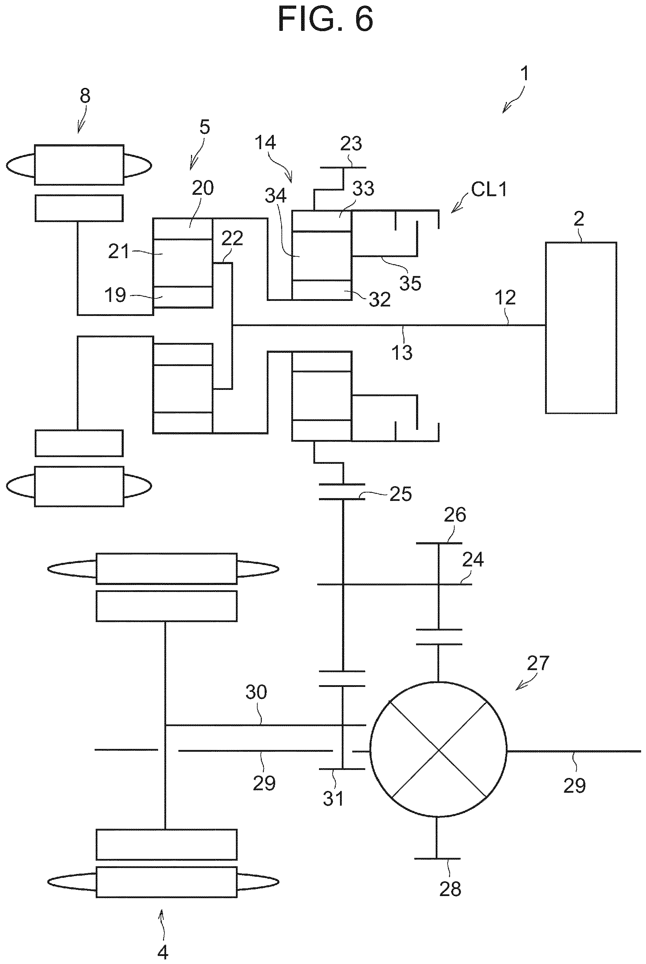

In a fourth specific example shown in FIG. 6, another single-pinion planetary gear mechanism 14 is provided between the ring gear 20 and the output gear 23. Specifically, the planetary gear mechanism 14 is provided that is composed of: a sun gear 32 coupled to the ring gear 20; a ring gear 33 disposed concentrically with the sun gear 32 and having internal teeth; a plurality of pinion gears 34 meshing with the sun gear 32 and the ring gear 33 and disposed at predetermined intervals in a rotation direction of the sun gear 32; and a carrier 35 retaining the pinion gears 34 so as to allow each pinion gear 34 to rotate as well as to revolve while maintaining a pitch between the pinion gears 34. The output gear 23 formed by an external gear is coupled to the ring gear 33. The clutch mechanism CL is provided so as to selectively couple together the carrier 35 and the ring gear 33.

Thus, in the hybrid vehicle 1 of the fourth specific example, when the clutch mechanism CL is engaged, the planetary gear mechanism 14 coupled to the power split device 5 forms a so-called directly coupled stage, and the engine 2 and the driving wheels 3 are coupled together through the power split device 5 so as to allow torque transmission. On the other hand, when the clutch mechanism CL is disengaged, the planetary gear mechanism 14 coupled to the power split device 5 is put into neutral and the carrier 35 idles, so that torque transmission between the engine 2 and the driving wheels 3 is mechanically interrupted.

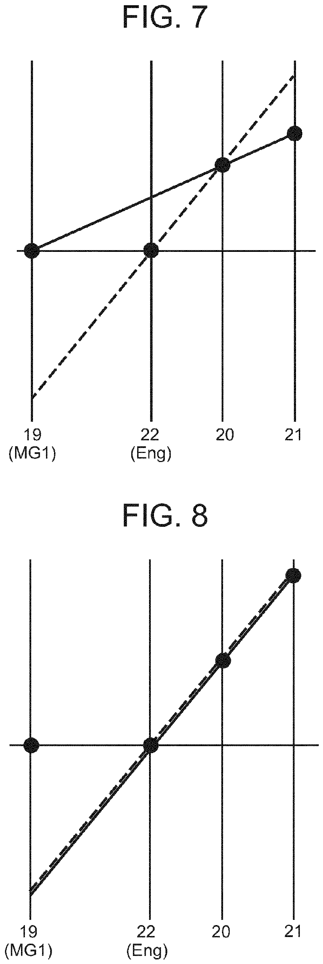

FIG. 7 to FIG. 10 are alignment charts illustrating the rotational speeds of the rotating elements 19, 20, 22 and the pinion gear 21 of the power split device 5 when the mechanical neutral is set. The dashed line shows the rotational speeds of the rotating elements 19, 20, 22 and the pinion gear 21 when the electrical neutral is set. The speed of the engine 2 and the rotational speeds of the first motor 8, the ring gear (output member) 20, and the pinion gear 21 are plotted as black circles on the lines representing the rotating elements 19, 20, 22 and the pinion gear 21.

FIG. 7 shows the rotational speeds of the rotating elements 19, 20, 22 and the pinion gear 21 in the mechanical neutral in the first specific example. As shown in FIG. 7, the sun gear 19 is stopped and the carrier 22 is idling at a predetermined rotational speed. This is because the carrier 22 and the engine 2 are uncoupled from each other as the clutch mechanism CL is disengaged, while the sun gear 19 and the first motor 8 are coupled together, so that inertial torque acting on the sun gear 19 becomes larger than inertial torque acting on the carrier 22. On the other hand, the engine 2 and the first motor 8 are stopped.

By contrast, when the electrical neutral is set, since the clutch mechanism CL is engaged, inertial torque acting on the carrier 22 becomes larger than inertial torque acting on the sun gear 19, so that the carrier 22 stops and the sun gear 19 rotates in the opposite direction from the ring gear 20. This means that the first motor 8 is corotated.

When shown in an alignment chart, the pinion gear 21 is located on the opposite side of the ring gear 20 from the carrier 22, and therefore the rotational speed of the pinion gear 21 becomes higher as the rotational speed of the carrier 22 becomes lower. Thus, the rotational speed of the pinion gear 21 can be reduced to a lower speed when the mechanical neutral is set than when the electrical neutral is set.

As described above, when the mechanical neutral is set, the rotational speeds of the first motor 8 and the pinion gear 21 can be reduced to lower speeds than when the electrical neutral is set. Thus, it is possible to restrain the first motor 8 and the pinion gear 21 from rotating excessively, and to reduce the power loss due to corotation of the first motor 8.

FIG. 8 shows the rotational speeds of the rotating elements 19, 20, 22 and the pinion gear 21 in the mechanical neutral in the second specific example. As shown in FIG. 8, the rotational speeds of the rotating elements 19, 20, 22 and the pinion gear 21 are the same as those when the electrical neutral is set. On the other hand, since the clutch mechanism CL is disengaged, the first motor 8 is maintained in a stopped state.

Thus, setting the mechanical neutral can restrain the first motor 8 from rotating excessively. Moreover, power loss due to corotation of the first motor 8 can be reduced.

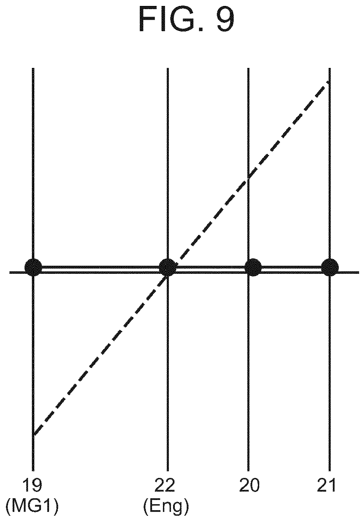

FIG. 9 shows the rotational speeds of the rotating elements 19, 20, 22 and the pinion gear 21 in the mechanical neutral in the third specific example. In the third specific example, torque transmission between the ring gear 20 and the driving wheels 3 is interrupted by disengaging the clutch mechanism CL. Therefore, stopping the engine 2 and the first motor 8 causes the rotating elements 19, 20, 22 and the pinion gear 21 to stop.

Thus, setting the mechanical neutral can restrain the first motor 8 from rotating excessively, and can reduce the power loss due to corotation of the first motor 8.

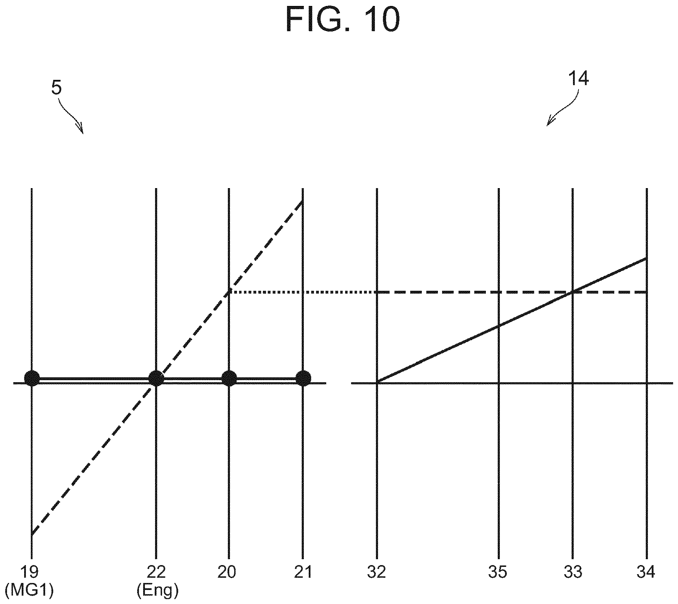

FIG. 10 shows the rotational speeds of the rotating elements 19, 20, 22 and the pinion gear 21 of the power split device 5, and the rotational speeds of the rotating elements 32, 33, 35 and the pinion gear 34 of the planetary gear mechanism 14 coupled to the power split device 5, in the mechanical neutral in the fourth specific example. In the fourth specific example, the ring gear 33 and the driving wheels 3 are always coupled together so as to allow torque transmission, so that the ring gear 33 rotates at a speed according to the vehicle speed. On the other hand, the clutch mechanism CL is disengaged and the engine 2 and the first motor 8 are stopped, so that inertial torque acting on the sun gear 32 becomes larger than inertial torque on the carrier 35. Therefore, the sun gear 32 is stopped and the carrier 35 is idling. The rotating elements 19, 20, 22 and the pinion gear 21 of the power split device 5 are maintained in a stopped state.

Thus, setting the mechanical neutral can restrain the first motor 8 and the pinion gear 21 from rotating excessively, and can reduce the power loss due to corotation of the first motor 8.

The rotational speeds of the first motor 8 and the pinion gear 21 in the electrical neutral in the first specific example to the fourth specific example become higher as the vehicle speed becomes higher. To set the electrical neutral and the mechanical neutral, any control may be adopted that can prevent engine torque from being transmitted to the driving wheels 3; for example, the engine speed may be controlled to an autonomous revolution speed or lower. When the mechanical neutral is set and the engine speed is controlled to the autonomous revolution speed, the first motor 8 and the pinion gear 21 rotate at lower speeds than when the engine 2 is completely stopped.

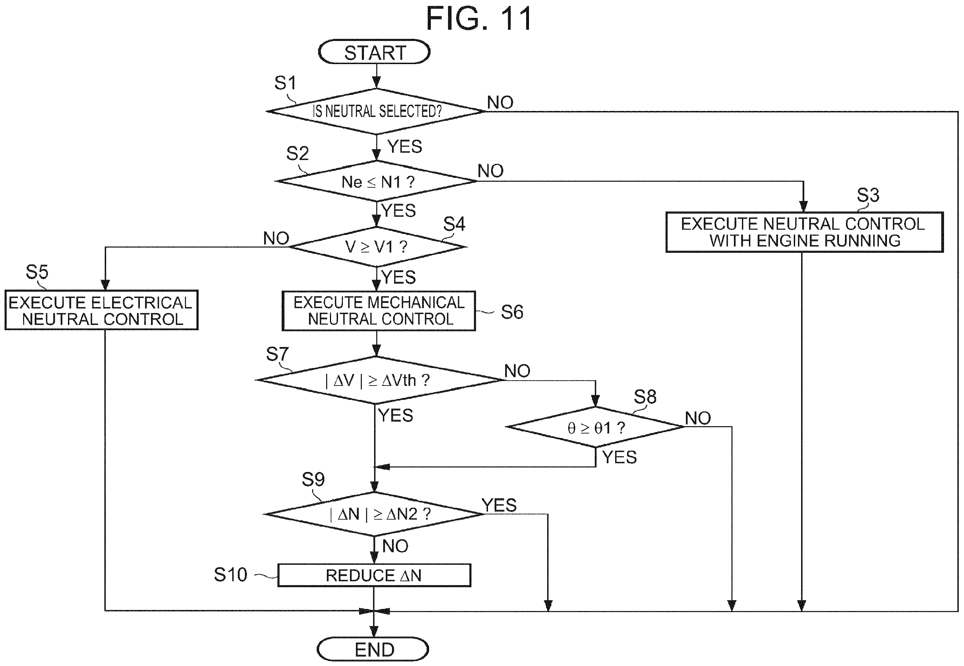

The hybrid vehicle control system in the embodiment of the present invention is configured to restrain the first motor 8 and the pinion gear 21 from rotating excessively and avoid an increase in power loss while the hybrid vehicle 1 is traveling in neutral in which torque transmission between the engine 2 and the driving wheels 3 is interrupted, with no driving torque being output from the engine 2. FIG. 11 shows a flowchart illustrating an example of control for this configuration. In the example of control shown in FIG. 11, first, it is determined whether or not neutral is selected (step S1). The determination in step S1 can be made based on a signal from a sensor that detects an operation of the shift lever 18. In the case of a vehicle in which neutral is selected regardless of an operation or the position of the shift lever 18, such as a vehicle in which neutral is automatically selected according to the vehicle speed or required drive power, this determination may be made based on a flag or the like that is turned on when neutral is selected. In the case of a vehicle thus configured, a control unit that shifts gears into neutral in accordance with a program corresponds to the "selector" in the embodiment of the present invention.

When neutral is not selected and the determination in step S1 is made in the negative, the current routine is directly ended for now. Conversely, when neutral is selected and the determination in step S1 is made in the affirmative, it is determined whether or not engine speed Ne is equal to or lower than an autonomous revolution speed N1 (step S2). Step S2 is a step for determining whether or not torque of the first motor 8 is controlled such that the first motor 8 keeps the engine speed Ne from increasing. In other words, step S2 is a step of determining whether engine torque is not transmitted to the driving wheels 3 despite the engine 2 running. Therefore, when the engine 2 is stopped or revolving autonomously, the determination in step S2 is made in the affirmative. On the other hand, there are cases where, despite the vehicle being in neutral, predetermined power is output from the engine 2 and reaction force torque is output from the first motor 8 to maintain the engine speed at a predetermined speed, such as when warming-up of a catalyst device (not shown) is requested. In such cases, the determination in step S2 is made in the negative. Step S2 may be replaced with a step of making the determination without detecting the engine speed, for example, making the determination based simply on whether or not the EV travel mode is set.

When the engine speed Ne is higher than the autonomous revolution speed N1, such as when reaction force torque is output from the first motor 8 to maintain the engine speed at a predetermined speed as described above, and the determination in step S2 is made in the negative, neutral control is executed with the engine 2 running (step S3) and the current routine is ended for now. Step S3 involves executing control so as to prevent torque from being transmitted to the driving wheels 3, for example, by interrupting a current to the first motor 8 or controlling the voltage such that the output torque of the first motor 8 becomes zero.

Conversely, when the engine speed Ne is equal to or lower than the autonomous revolution speed N1 and the determination in step S2 is made in the affirmative, it is determined whether or not vehicle speed V is equal to or higher than a first predetermined vehicle speed V1 (step S4). The first predetermined vehicle speed V1 in step S4 is a vehicle speed that is defined such that the rotational speeds of the first motor 8 and the pinion gear 21 do not reach upper limit rotational speeds when the electrical neutral is set.

When the vehicle speed V is lower than the first predetermined vehicle speed V1 and the determination in step S4 is made in the negative, the electrical neutral control is executed (step S5) and the current routine is ended for now. In other words, a current to the first motor 8 and the second motor 4 is stopped.

Conversely, when the vehicle speed V is equal to or higher than the first predetermined vehicle speed V1 and the determination in step S4 is made in the affirmative, the mechanical neutral control is executed (step S6). In other words, the clutch mechanism CL is disengaged and a current to the second motor 4 is stopped.

On the other hand, when the vehicle speed V changes relatively significantly while the vehicle is traveling in neutral, the shift lever 18 is highly likely to be shifted to the drive position again. Also when the accelerator is operated while the vehicle is traveling in neutral, the shift lever 18 is highly likely to be shifted to the drive position. When the shift lever 18 is thus shifted to the drive position, first, a rotational speed difference ΔN between a rotating member on one side (e.g., the rotating member 10 in FIG. 2A) and a rotating member on the other side (e.g., the rotating member 11 in FIG. 2A) composing the clutch mechanism CL is reduced to be equal to or smaller than an allowable value ΔN1 before the clutch mechanism CL is engaged. This may result in low responsiveness in acceleration.

In the example of control shown in FIG. 11, therefore, after the mechanical neutral control is executed in step S6, it is determined whether or not an amount of change (absolute value) |ΔV| in vehicle speed from the time when the shift lever 18 is shifted to the neutral position or the time when the clutch mechanism CL is disengaged is equal to or larger than a predetermined value ΔVth (step S7). The predetermined value ΔVth in step S7 can be defined, for example, based on an amount of change in vehicle speed that may cause the driver to shift the shift lever 18 to the drive position (D) or the brake position (B) to apply engine braking when the vehicle accelerates by traveling on a downhill etc. This value is stored in the ECU 17 in advance.

When the amount of change |ΔV| in vehicle speed is smaller than the predetermined value ΔVth and the determination in step S7 is made in the negative, it is determined whether or not an accelerator operation amount θ is equal to or larger than a predetermined amount θ1 (step S8). The predetermined amount θ1 in step S8 is defined as an accelerator operation amount that is large enough to allow determination of whether or not the driver has operated the accelerator with the intention of traveling at an accelerated speed.

When the amount of change |ΔV| in vehicle speed is smaller than the predetermined value ΔVth as well as the accelerator operation amount θ is smaller than the predetermined amount θ1, and the determinations in step S7 and step S8 are made in the negative, the current routine is directly ended for now. Conversely, when the amount of change |ΔV| in vehicle speed is equal to or larger than the predetermined value ΔVth and the determination in step S7 made is in the affirmative, or when the accelerator operation amount θ is equal to or larger than the predetermined amount θ1 and the determination in step S8 is made in the affirmative, it is determined whether or not the rotational speed difference (absolute value) |ΔN| between the rotating member 10 on one side and the rotating member 11 on the other side composing the clutch mechanism CL is equal to or smaller than a predetermined value ΔN2 (step S9). The predetermined value ΔN2 in step S9 is defined such that the control system can engage the clutch mechanism CL within an allowable time after starting to reduce the rotational speed difference ΔN between the rotating member 10 on one side and the rotating member 11 on the other side to engage the clutch mechanism CL. It is therefore not absolutely necessary to define the predetermined value ΔN2 in step S9 as the rotational speed difference ΔN1 between the rotating members 10, 11 at which the clutch mechanism CL can be engaged.

When the rotational speed difference |ΔN| between the rotating members 10, 11 is equal to or smaller than the predetermined value ΔN2 and the determination in step S9 is made in the affirmative, the control system can engage the clutch mechanism CL within the allowable time even when the shift lever 18 is shifted to the drive position. Therefore, the current routine is directly ended for now. Conversely, when the rotational speed difference |ΔN| between the rotating members 10, 11 is larger than the predetermined value ΔN2 and the determination in step S9 is made in the negative, the control system may take a time longer than the allowable time to engage the clutch mechanism CL when the shift position is changed to the drive position. Therefore, the rotational speed difference ΔN between the rotating members 10, 11 is reduced (step S10), and the current routine is ended for now. Step S10 can be executed by controlling the rotational speed of the first motor 8, and the target rotational speed difference may be any rotational speed lower than the predetermined value ΔN2. The control in step S10 corresponds to the "first synchronization control" in the embodiment of the present invention.

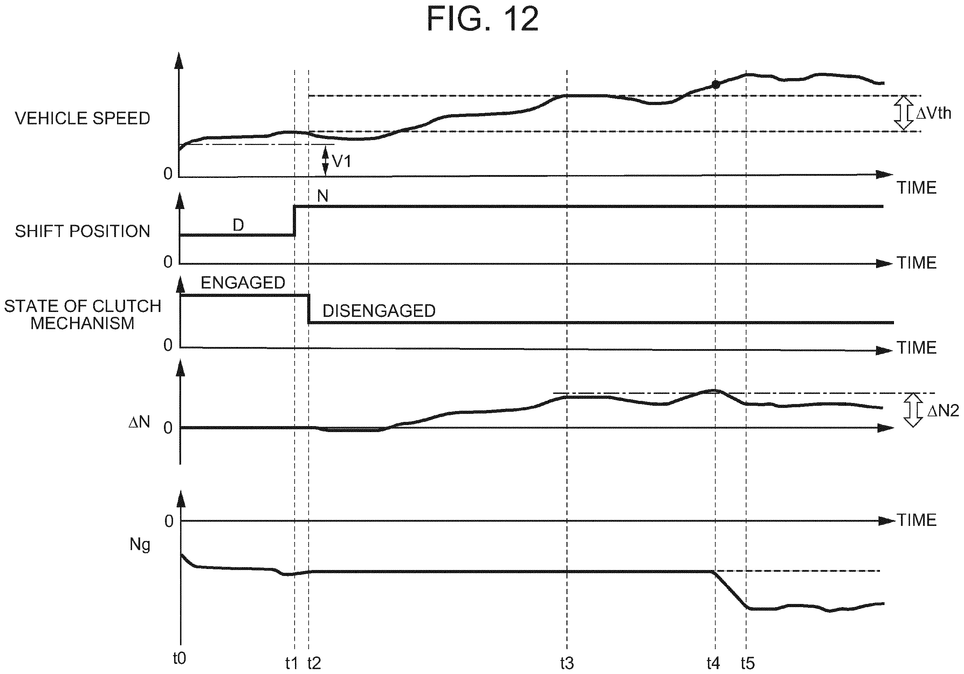

FIG. 12 is a time chart showing whether or not the clutch mechanism CL is engaged, changes in rotational speed difference ΔN between the rotating member 10 and the rotating member 11 on one side and the other side of the clutch mechanism CL, and changes in rotational speed Ng of the first motor 8, when neutral is selected while the hybrid vehicle 1 of the first specific example is traveling in the EV mode and the vehicle accelerates by traveling on a downhill.

At time t0 in FIG. 12, the drive position is selected by the shift lever 18 and the vehicle 1 is traveling in the EV mode. Therefore, the clutch mechanism CL is engaged, and the rotating member 10 and the rotating member 11 on one side and the other side of the clutch mechanism CL are rotating at the same speed. The first motor 8 is rotating in the opposite direction from the ring gear 20 that is the output element of the power split device 5.

At time t1, the shift lever 18 is operated to select neutral, and the vehicle speed V at that time is temporarily stored in the ECU 17. Since the vehicle speed V at time t1 is higher than the first predetermined vehicle speed V1, the mechanical neutral is selected. Therefore, at time t2, a little after time t1, the clutch mechanism CL is disengaged to set the mechanical neutral, and the vehicle travels by inertia. In this case, a current to the first motor 8 is stopped, so that the first motor 8 continues to rotate at an almost constant speed by inertial torque.

As described above, in the example shown in FIG. 12, the vehicle speed V increases gradually as the vehicle travels on a downhill, and at time t3, the amount of change ΔV in vehicle speed temporarily becomes equal to or larger than the predetermined value ΔVth. On the other hand, the rotational speed difference ΔN between the rotating member 10 and the rotating member 11 on one side and the other side of the clutch mechanism CL is not larger than the predetermined value ΔN2, and therefore the determination in step S9 in FIG. 11 is made in the affirmative. This means that the control of reducing the rotational speed difference ΔN is not executed.

At time t4, the amount of change ΔV in vehicle speed becomes equal to or larger than the predetermined value AVth. At the same time, the rotational speed difference ΔN between the rotating member 10 and the rotating member 11 on one side and the other side of the clutch mechanism CL exceeds the predetermined value ΔN2, and the determination in step S9 is made in the negative. Therefore, from time t4, the rotational speed of the first motor 8 starts to change so as to reduce the rotational speed difference ΔN between the rotating member 10 and the rotating member 11 on one side and the other side of the clutch mechanism CL. The control over the rotational speed of the first motor 8 is completed at time t5, a little after the rotational speed difference ΔN between the rotating member 10 and the rotating member 11 on one side and the other side of the clutch mechanism CL has become equal to or smaller than the predetermined value ΔN2.

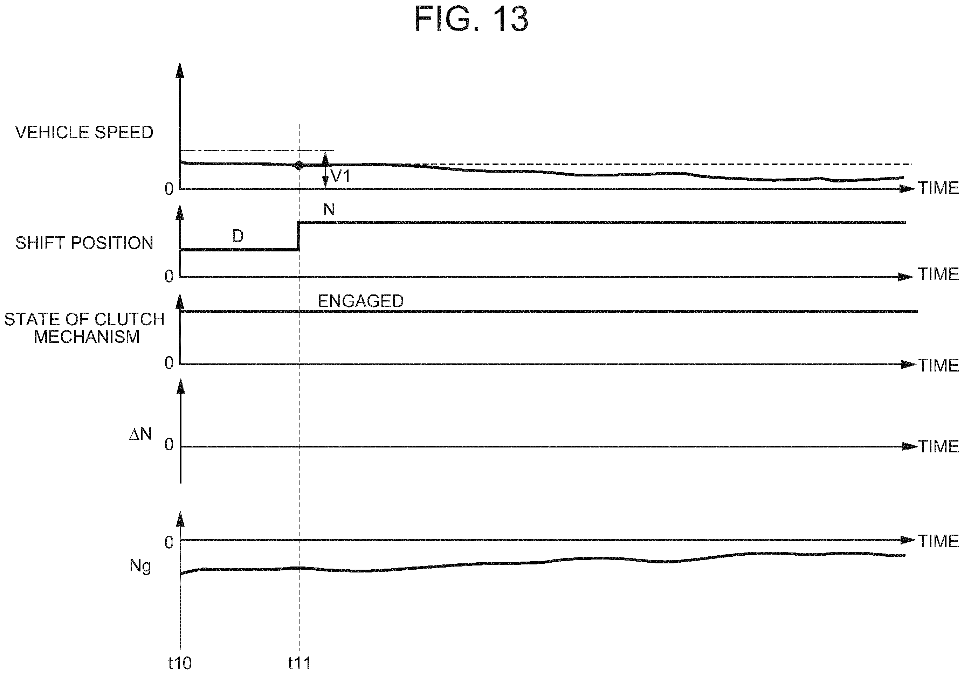

FIG. 13 is a time chart showing whether or not the clutch mechanism CL is engaged, changes in rotational speed difference ΔN between the rotating member 10 and the rotating member 11 on one side and the other side of the clutch mechanism CL, and changes in rotational speed Ng of the first motor 8, when neutral is selected while the hybrid vehicle 1 of the first specific example is traveling in the EV mode and the vehicle travels by inertia at low speed.

At time t10 in FIG. 13, the drive position is selected by the shift lever 18 and the vehicle is traveling in the EV mode. Therefore, the clutch mechanism CL is engaged, and the rotating member 10 and the rotating member 11 on one side and the other side of the clutch mechanism CL are rotating at the same speed. The first motor 8 is rotating in the opposite direction from the ring gear 20 that is the output element of the power split device 5.

At time t11, the shift lever 18 is operated to select neutral, and the vehicle speed V at that time is temporarily stored in the ECU 17. Since the vehicle speed V at time t11 is lower than the first predetermined vehicle speed V1, the electrical neutral is selected. Therefore, the clutch mechanism CL is maintained in the engaged state, so that the rotating member 10 and the rotating member 11 on one side and the other side of the clutch mechanism CL rotate at the same speed. From time t11 onward, the vehicle speed V decreases due to resistance to traveling etc., and the rotational speed of the first motor 8 decreases accordingly.

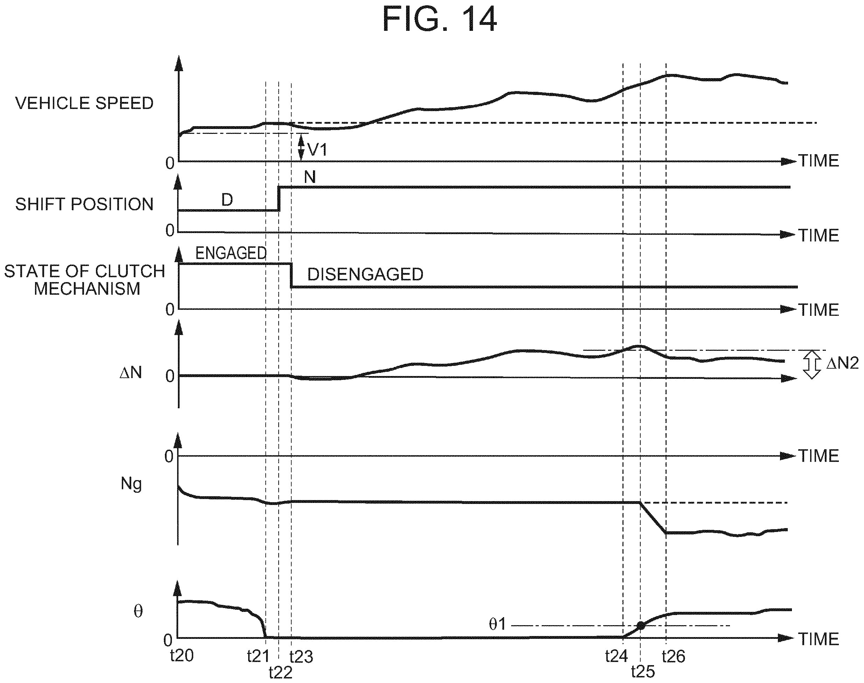

FIG. 14 is a time chart showing whether or not the clutch mechanism CL is engaged, changes in rotational speed difference ΔN between the rotating member 10 and the rotating member 11 on one side and the other side of the clutch mechanism CL, changes in rotational speed Ng of the first motor 8, and changes in accelerator operation amount, when neutral is selected while the hybrid vehicle 1 of the first specific example is traveling in the EV mode and then the accelerator is operated.

At time t20 in FIG. 14, the drive position is selected by the shift lever 18 and the vehicle is traveling in the EV mode. Therefore, the clutch mechanism CL is engaged, and the rotating member 10 and the rotating member 11 on one side and the other side of the clutch mechanism CL are rotating at the same speed. The first motor 8 is rotating in the opposite direction from the ring gear 20 that is the output element of the power split device 5. From time t20, the accelerator operation amount θ decreases gradually, and at time t21, the accelerator operation amount θ becomes zero.

At time t22, the shift lever 18 is operated to select neutral, and the vehicle speed V at that time is temporarily stored in the ECU 17. Since the vehicle speed V at time t22 is higher than the first predetermined vehicle speed V1, the mechanical neutral is selected. Therefore, at time t23, a little after time t22, the clutch mechanism CL is disengaged to set the mechanical neutral, and the vehicle travels by inertia. In this case, a current to the first motor 8 is stopped, so that the first motor 8 continues to rotate at an almost constant speed by inertial torque.

In the example shown in FIG. 14, the vehicle speed V increases gradually due to the vehicle traveling on a downhill etc. At time t24, the accelerator starts to be operated, and at time t25, the accelerator operation amount θ becomes equal to or larger than the predetermined amount θ1. At time t25, the rotational speed difference ΔN between the rotating member 10 and the rotating member 11 on one side and the other side of the clutch mechanism CL is larger than the predetermined value ΔN2. As a result, the determination in step S8 in FIG. 11 is made in the affirmative and the determination in step S9 in FIG. 11 is made in the negative, so that, from time t25, the rotational speed of the first motor 8 starts to change so as to reduce the rotational speed difference ΔN between the rotating member 10 and the rotating member 11 on one side and the other side of the clutch mechanism CL. The control over the rotational speed of the first motor 8 is completed at time t26, a little after the rotational speed difference ΔN between the rotating member 10 and the rotating member 11 on one side and the other side of the clutch mechanism CL has become equal to or smaller than the predetermined value ΔN2.

As described above, when neutral is selected while the speed of the engine 2 is equal to or lower than a predetermined speed, the mechanical neutral in which torque transmission between the engine 2 and the driving wheels 3 is interrupted by disengaging the clutch mechanism CL is selected. Thus, it is possible to restrain the first motor 8 and the pinion gear 21 from rotating excessively, and to avoid a decrease in durability of the first motor 8 and the pinion gear 21. Moreover, the power loss due to corotation of the first motor 8 can be reduced, i.e., generation of braking torque that is not needed for the vehicle traveling in neutral can be avoided. When the amount of change ΔV in vehicle speed from the time when neutral is selected or the time when execution of the mechanical neutral control is started has become equal to or larger than the predetermined value ΔVth, or the accelerator operation amount θ has become equal to or larger than the predetermined amount θ1, while the vehicle is traveling under the mechanical neutral control, the rotational speed difference ΔN between the two rotating members composing the clutch mechanism CL is reduced. This can reduce the delay in engaging the clutch mechanism CL when the shift lever 18 is operated to select the drive position.

As described above, the rotational speed difference ΔN between the two rotating members is reduced in advance. Thus, after receiving a request for engaging the clutch mechanism CL, the control system needs to make a smaller amount of change to reduce the rotational speed difference ΔN to an allowable difference at which the clutch mechanism CL can be engaged, and therefore can reduce this difference to the allowable difference at a lower rate of change. As a result, the need for excessively increasing the output of the first motor 8 can be eliminated, which allows the first motor 8 to be driven at an operating point at which motor efficiency that is a ratio of electricity applied to the first motor 8 relative to power output from the first motor 8 is high. Moreover, a decrease in durability of the clutch mechanism CL can be avoided because the clutch mechanism CL can be engaged after the rotational speed difference ΔN between the two rotating members is sufficiently reduced.

In the above-described example of control, when the engine speed Ne is equal to or lower than the autonomous revolution speed N1, it is further determined whether to select the mechanical neutral or the electrical neutral according to whether or not the vehicle speed V is equal to or higher than the first predetermined vehicle speed V1. Alternatively, the control system may be configured to uniformly select the mechanical neutral when the engine speed Ne is equal to or lower than the autonomous revolution speed N1.

The configuration of the hybrid vehicle in the embodiment of the present invention is not limited to the configuration in which torque transmission between the rotating elements 6, 7, 9 of the power split device 5 and the engine 2, the first motor 8, or the driving wheels 3 is interrupted by disengaging the clutch mechanism CL as shown in FIG. 1. The hybrid vehicle may have a clutch mechanism CL provided so as to interrupt torque transmission inside a differential mechanism constituting the power split device 5.

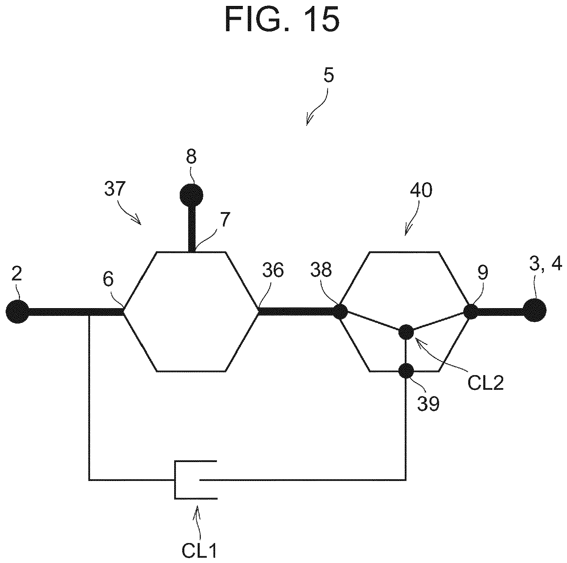

FIG. 15 is a schematic view illustrating this configuration. The same components as in FIG. 1 are denoted by the same reference signs and the description thereof will be omitted. In the hybrid vehicle 1 shown in FIG. 15, the power split device 5 is formed by a compound planetary gear mechanism. The power split device 5 is composed of: a first differential mechanism 37 including two rotating elements of the first rotating element 6 coupled to the engine 2, the second rotating element 7 coupled to the first motor 8, and the third rotating element 9 coupled to the second motor 4 and the driving wheels 3 (e.g., the first rotating element 6 and the second rotating element 7), and a fourth rotating element 36 other than these three rotating elements; a second differential mechanism 40 including one of the three rotating elements 6, 7, 9 that is not coupled to the first differential mechanism 37 (e.g., the third rotating element 9), a fifth rotating element 38 coupled to the fourth rotating element 36, and a sixth rotating element 39 that is yet another rotating element; a first clutch mechanism CL1 that selectively couples together either of the two rotating elements of the first rotating element 6, the second rotating element 7, and the third rotating element 9 that are coupled to the first differential mechanism 37 (e.g., the first rotating element 6) and the sixth rotating element 39; and a second clutch mechanism CL2 that selectively couples together any two rotating elements of the second differential mechanism 40. The fourth rotating element 36 corresponds to the "first coupling element" in the embodiment of the present invention, and the fifth rotating element 38 corresponds to the "second coupling element" in the embodiment of the present invention.

The power split device 5 thus configured can transmit engine torque to the driving wheels 3 by engaging one of the first clutch mechanism CL1 and the second clutch mechanism CL2 and disengaging the other one, and outputting reaction force torque from the first motor 8. In other words, stopping a current to the first motor 8 can interrupt torque transmission between the engine 2 and the driving wheels 3. Thus, the electrical neutral can be set.

When both the first clutch mechanism CL1 and the second clutch mechanism CL2 are engaged, engine torque can be transmitted to the driving wheels 3 without the first motor 8 outputting reaction force torque. In other words, disengaging both the first clutch mechanism CL1 and the second clutch mechanism CL2 can interrupt torque transmission between the engine 2 and the driving wheels 3. Thus, the mechanical neutral can be set.

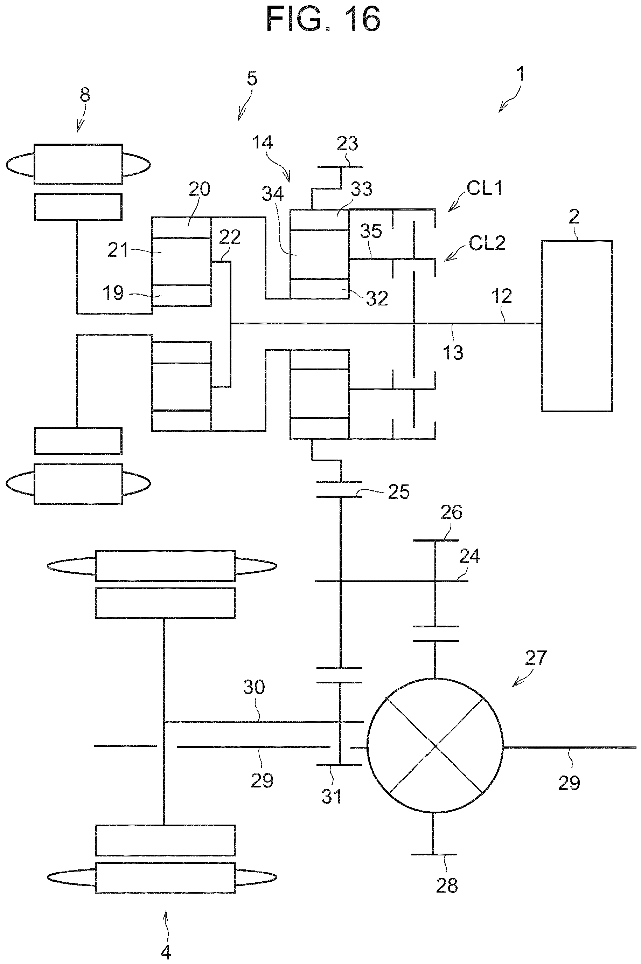

FIG. 16 shows a specific example of the hybrid vehicle 1 shown in FIG. 15. The hybrid vehicle 1 includes the clutch mechanism (second clutch mechanism CL2) that couples together the carriers 22, 35 in the fourth specific example. Therefore, those components in FIG. 16 that are the same as in FIG. 6 are denoted by the same reference signs and the description thereof will be omitted.

When the first clutch mechanism CL1 is engaged, the hybrid vehicle 1 is set to an HV - Lo mode in which the speed of the engine 2 when the rotational speed of the first motor 8 is controlled to zero is higher than the rotational speed of the ring gear 33, and when the second clutch mechanism CL2 is engaged, the hybrid vehicle 1 is set to an HV - Hi mode in which the speed of the engine 2 when the rotational speed of the first motor 8 is controlled to zero is lower than the rotational speed of the ring gear 33. Specifically, when the first clutch mechanism CL1 is engaged, a speed reduction ratio (Ne / No) that is a ratio of the speed Ne of the engine 2 to rotational speed No of the driving wheels 3 in a state where rotation of the first motor 8 is stopped becomes higher, and when the second clutch mechanism CL2 is engaged, this speed reduction ratio becomes lower. The HV - Lo mode corresponds to the "other travel mode" in the embodiment of the present invention, and the HV - Hi mode corresponds to the "one travel mode" in the embodiment of the present invention. When both the first clutch mechanism CL1 and the second clutch mechanism CL2 are engaged, a fixed-stage mode is set in which the gear ratio in the power split device 5 is one.

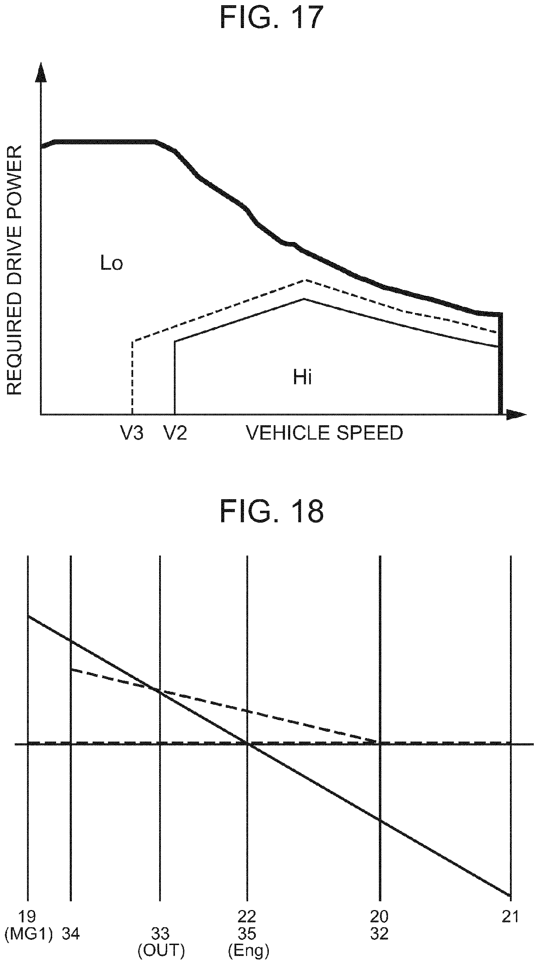

The control system is configured to set these modes based on the map shown in FIG. 17. Specifically, the HV - Hi mode is set when the vehicle speed is higher than a second predetermined vehicle speed V2 and relatively small drive power is required. The HV - Lo mode is set when the vehicle speed is lower than a third predetermined vehicle speed V3, or when the vehicle speed is higher than the third predetermined vehicle speed V3 but relatively large drive power is required. When an operating point determined by the vehicle speed and the required drive power falls within a region between a region for setting the HV - Lo mode and a region for setting the HV - Hi mode, the fixed-stage mode is set.

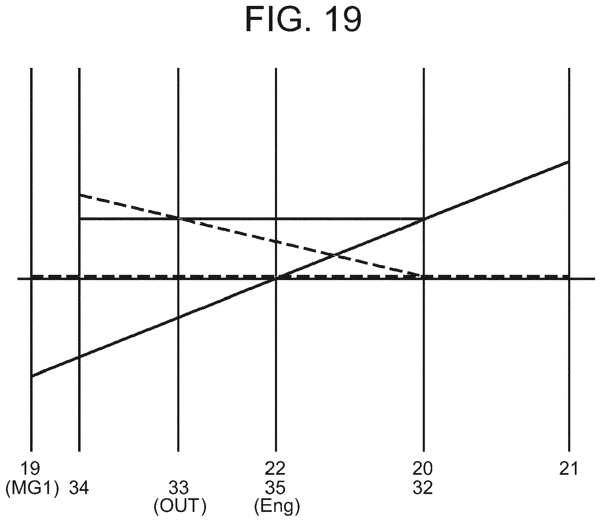

FIG. 18 shows the rotational speeds of the rotating elements 19, 20, 22, 32, 35, 33 and the pinion gears 21, 34 of the power split device 5 when the electrical neutral control is executed with the first clutch mechanism CL1 engaged, and FIG. 19 shows the rotational speeds of the rotating elements 19, 20, 22, 32, 35, 33 and the pinion gears 21, 34 of the power split device 5 when the electrical neutral control is executed with the second clutch mechanism CL2 engaged. The dashed lines in FIG. 18 and FIG. 19 show the rotational speeds of the rotating elements 19, 20, 22, 32, 35, 33 and the pinion gears 21, 34 when the mechanical neutral control in which the first clutch CL1 and the second clutch CL2 are disengaged is executed.

As shown in FIG. 18 and FIG. 19, when the electrical neutral control is executed, the sun gear 19 (or the first motor 8) and the pinion gear 21 rotate at high speeds. The rotational speeds of these gears become higher as the vehicle speed becomes higher.

On the other hand, when the mechanical neutral control is executed, the sun gear 19 (or the first motor 8) and the pinion gear 21 can be maintained in a stopped state. Thus, it is possible to avoid a decrease in durability of the first motor 8 and the pinion gear 21 due to excessive rotation, and an increase in power loss due to corotation of the first motor 8, by executing the mechanical neutral control.

The example of control intended for the hybrid vehicle 1 configured as shown in FIG. 16 is configured, as with the control in FIG. 11, to execute the mechanical neutral control when the vehicle speed V is equal to or higher than the predetermined vehicle speed V1. On the other hand, the hybrid vehicle 1 shown in FIG. 16 includes two clutch mechanisms CL1, CL2, and which of the clutch mechanisms to engage when the shift lever 18 is shifted to the drive position depends on the vehicle speed. Thus, the example of control intended for the hybrid vehicle 1 shown in FIG. 16 is configured such that the clutch mechanism for reducing the rotational speed difference is selected according to the vehicle speed after execution of the mechanical neutral control.

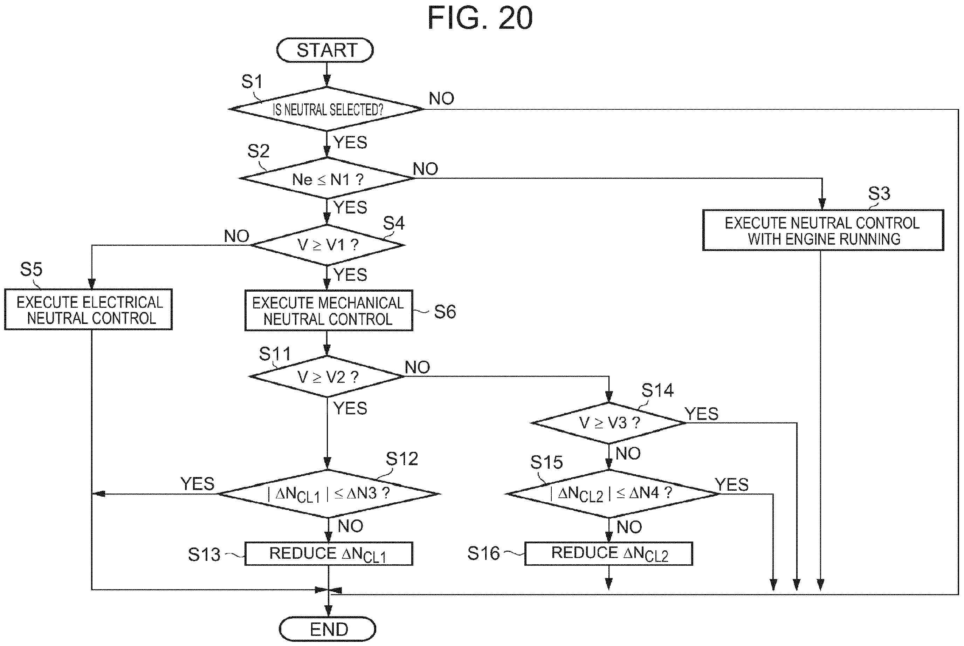

FIG. 20 shows a flowchart illustrating this example of control. The same steps as in FIG. 11 are denoted by the same step numbers and the description thereof will be omitted. In the example of control shown in FIG. 20, it is determined whether or not the vehicle speed V is equal to or higher than the second predetermined vehicle speed V2 after execution of the mechanical neutral control (step S11). The second predetermined vehicle speed V2 in step S11 is the same as the second predetermined vehicle speed V2 in the map of FIG. 17, and is defined as a vehicle speed at which the HV - Hi mode is selected if the HV travel mode in which engine torque is transmitted to the driving wheels 3 is to be set.

The control system is configured to, when the vehicle speed V is equal to or higher than the second predetermined vehicle speed V2 and the determination in step S11 is made in the affirmative, reduce the rotational speed difference between the rotating member on one side (i.e., the carrier 35) and the rotating member on the other side (i.e., the ring gear 33) of the first clutch mechanism CL1 used to set the HV - Hi mode. Specifically, first, it is determined whether or not a rotational speed difference (absolute value) |ΔN_{CL1}| between the carrier 35 and the ring gear 33 is equal to or smaller than a predetermined value ΔN3 (step S12). The predetermined value ΔN3 in step S12 is defined according to the configuration of the first clutch mechanism CL1, and therefore may be the same as or different from the predetermined value ΔN2.

When the rotational speed difference |ΔN_{CL1}| between the carrier 35 and the ring gear 33 is equal to or smaller than the predetermined value ΔN3 and the determination in step S12 is made in the affirmative, the current routine is directly ended for now. Conversely, when the rotational speed difference |ΔN_{CL1}| between the carrier 35 and the ring gear 33 is larger than the predetermined value ΔN3 and the determination in step S12 is made in the negative, the rotational speed difference ΔN_{CL1} between the carrier 35 and the ring gear 33 is reduced (step S13), and the current routine is ended for now. Step S13 can be executed by controlling the rotational speed of the first motor 8. Step S13 corresponds to the "second synchronization control" in the embodiment of the present invention.

On the other hand, when the vehicle speed V is lower than the second predetermined vehicle speed V2 and the determination in step S11 is made in the negative, it is determined whether or not the vehicle speed V is equal to or higher than the third predetermined vehicle speed V3 (step S14). The third predetermined vehicle speed V3 in step S14 is the same as the third predetermined vehicle speed V3 in the map shown in FIG. 17, and is defined as a vehicle speed that falls within the region for selecting the fixed-stage mode if the HV travel mode in which engine torque is transmitted to the driving wheels 3 is to be set. In other words, the third predetermined vehicle speed V3 is defined as a vehicle speed that falls within the region for selecting the HV - Lo mode if the vehicle speed V is lower than the third predetermined vehicle speed V3. The third predetermined vehicle speed V3 is lower than the second predetermined vehicle speed V2 in step S11.

The control system is configured to, when the vehicle speed V is lower than the third predetermined vehicle speed V3 and the determination in step S14 is made in the negative, reduce the rotational speed difference between the rotating member on one side (i.e., the carrier 35) and the rotating member on the other side (i.e., the carrier 22) of the first clutch mechanism CL1 used to set the HV - Lo mode. Specifically, first, it is determined whether or not a rotational speed difference (absolute value) |ΔN_{CL2}| between the carrier 35 and the carrier 22 is equal to or smaller than a predetermined value ΔN4 (step S15). As with the predetermined value ΔN3 in step S12, the predetermined value ΔN4 in step S15 is defined according to the configuration of the second clutch mechanism CL2, and therefore may be the same as or different from the predetermined value ΔN2 or ΔN3.

When the rotational speed difference |ΔN_{CL2}| between the carrier 35 and the carrier 22 is equal to or smaller than the predetermined value ΔN4 and the determination in step S15 is made in the affirmative, the current routine is directly ended for now. Conversely, when the rotational speed difference |ΔN_{CL2}| between the carrier 35 and the carrier 22 is larger than the predetermined value ΔN4 and the determination in step S15 is made in the negative, the rotational speed difference ΔN_{CL2} between the carrier 35 and the carrier 22 is reduced (step S16), and the current routine is ended for now. Step S16 can be executed by controlling the rotational speed of the first motor 8. Step S16 corresponds to the "third synchronization control" in the embodiment of the present invention.

When the vehicle speed V is equal to or higher than the third predetermined vehicle speed V3 and the determination in step S14 is made in the affirmative, if the HV travel mode in which engine torque is transmitted to the driving wheels 3 is to be set, the fixed-stage mode is selected. However, if the rotational speed difference |ΔN_{CL2}| between the carrier 35 and the carrier 22 is reduced, the rotational speed difference |ΔN_{CL1}| between the carrier 35 and the ring gear 33 increases. Conversely, if the rotational speed difference |ΔN_{CL1}| between the carrier 35 and the ring gear 33 is reduced, the rotational speed difference |ΔN_{CL2}| between the carrier 35 and the carrier 22 increases. In the example shown in FIG. 20, therefore, when the vehicle speed V is equal to or higher than the third predetermined vehicle speed V3 and the determination in step S14 is made in the affirmative, the current routine is directly ended for now.

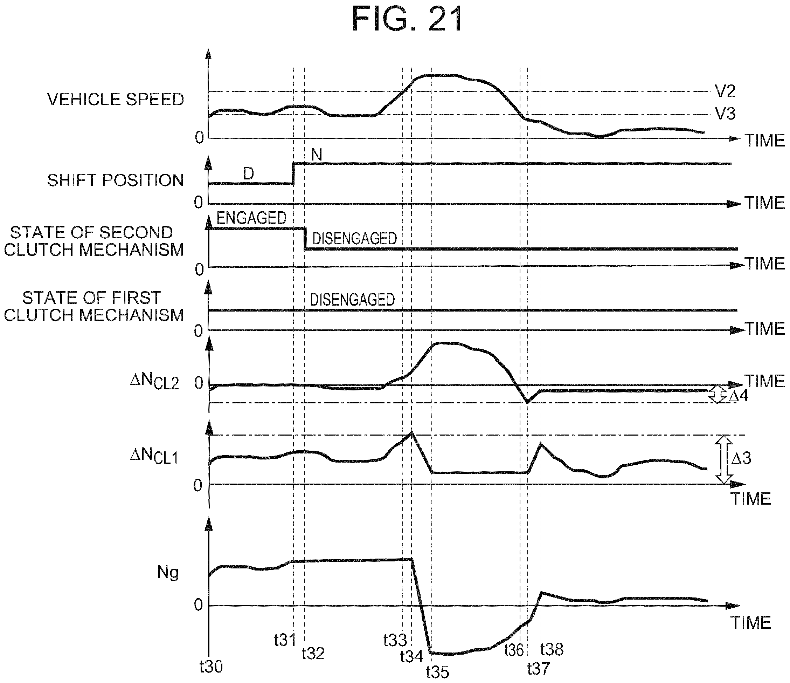

FIG. 21 is a time chart showing whether or not the clutch mechanisms CL1, CL2 are engaged, changes in rotational speed differences ΔN_{CL1}, ΔN_{CL2} between the rotating members composing the clutch mechanisms CL1, CL2, and changes in rotational speed Ng of the first motor 8, when the example of control shown in FIG. 20 is executed.

At time t30 in FIG. 21, the drive position is selected, and in this state the second clutch mechanism CL2 is engaged and the first clutch mechanism CL1 is disengaged. Therefore, the carrier 22 and the carrier 35 are rotating at the same speed, and the rotational speed difference ΔN_{CL1} between the carrier 35 and the ring gear 33 has a value corresponding to the vehicle speed. The first motor 8 is rotating in the same direction as the ring gear 33.

At time t31, the shift lever 18 is operated to select neutral, and the vehicle speed V at that time is temporarily stored in the ECU 17. Since the vehicle speed V at time t31 is higher than the first predetermined vehicle speed V1, the mechanical neutral is selected. Therefore, at time t32, a little after time t31, the second clutch mechanism CL2 is disengaged to set the mechanical neutral, and the vehicle travels by inertia.

The vehicle speed V at time t31 is lower than the second vehicle speed V2 and is equal to or higher than the third vehicle speed V3, and the determination in step S11 in FIG. 20 is made in the negative and the determination in step S14 in FIG. 20 is made in the affirmative. Therefore, a current to the first motor 8 is stopped, so that the first motor 8 continues to rotate at an almost constant speed by inertial torque.

At time t33, the vehicle speed V3 becomes equal to or higher than the second vehicle speed V2, and at time t34, a little after time t33, the rotational speed difference ΔN_{CL1} between the carrier 35 and the ring gear 33 exceeds the predetermined value ΔN3. Therefore, at time t34, the determination in step S12 in FIG. 20 is made in the negative, and the rotational speed of the first motor 8 changes so as to reduce the rotational speed difference ΔN_{CL1}. Then, at time t35 when the rotational speed difference ΔN_{CL1} has been reduced, a current to the first motor 8 is stopped.

Moreover, in the example shown in FIG. 21, the vehicle speed V decreases gradually from time t35, and the vehicle speed V becomes lower than the third predetermined vehicle speed V3 at time t36. At time t37, a little after time t36, the rotational speed difference ΔN_{CL2} between the carrier 35 and the carrier 22 exceeds the predetermined value ΔN4. Therefore, at time t37, the determination in step S15 in FIG. 20 is made in the negative, and the rotational speed of the first motor 8 changes so as to reduce the rotational speed difference ΔN_{CL2}. Then, at time t38 when the rotational speed difference ΔN_{CL2} has been reduced, a current to the first motor 8 is stopped.

Executing the example of control shown in FIG. 20 as described above can produce the same effects as executing the example of control shown in FIG. 11. In the configuration in which the mechanical neutral is set by disengaging the plurality of clutch mechanisms CL1, CL2, the clutch mechanism to be used to reduce the rotational speed difference is selected according to the vehicle speed as shown in FIG. 20. This can reduce the delay in engaging the clutch mechanism in response to a shift of the shift lever 18 to the drive position, without excessively driving the first motor 8.

## Claims

1. A hybrid vehicle control system, comprising:
a differential mechanism (PL1) including at least three rotating elements of a first rotating element (6), a second rotating element (7), and a third rotating element (9), the three rotating elements being configured to differentially rotate;
an engine (2) coupled to the first rotating element (6) so as to allow torque transmission;
a first motor (8) coupled to the second rotating element (7) so as to allow torque transmission;
a driving wheel (3) coupled to the third rotating element (9) so as to allow torque transmission;
a second motor (4) coupled to the driving wheel (3) or another driving wheel different from the driving wheel (3) so as to allow torque transmission;
an engaging mechanism configured to selectively interrupt torque transmission from the engine (2) to the driving wheel (3) through the differential mechanism (PL1);
a selector that selects neutral in which torque transmission from the engine (2) to the driving wheel (3) through the differential mechanism (PL1) is interrupted; and
an electronic control unit configured to control the first motor (8), the second motor (4), and the engaging mechanism,
the electronic control unit being configured to, when the neutral is selected, set either mechanical neutral in which the engaging mechanism is disengaged or electrical neutral in which a current to the first motor (8) is stopped while the engaging mechanism is engaged, and
the electronic control unit being configured to set the mechanical neutral when the neutral is selected while speed of the engine (2) is equal to or lower than a predetermined speed.

2. The hybrid vehicle control system according to claim 1, wherein the predetermined speed includes a zero speed.

3. The hybrid vehicle control system according to claim 1, wherein the predetermined speed includes an autonomous revolution speed.

4. The hybrid vehicle control system according to any one of claims 1 to 3, wherein:
the electronic control unit is configured to detect vehicle speed when the neutral is selected;
the electronic control unit is configured to set the mechanical neutral when the detected vehicle speed is equal to or higher than a first predetermined vehicle speed; and
the electronic control unit is configured to set the electrical neutral when the detected vehicle speed is lower than the first predetermined vehicle speed.

5. The hybrid vehicle control system according to any one of claims 1 to 4, wherein:
the engaging mechanism is configured to engage a first rotating member and a second rotating member configured to rotate relative to the first rotating member with each other to create an engaged state that allows torque transmission from the engine (2) to the driving wheel (3) through the differential mechanism (PL1); and
the electronic control unit is configured to detect that a rotational speed difference between the first rotating member and the second rotating member while the mechanical neutral is set is equal to or larger than a predetermined difference, and when the rotational speed difference between the first rotating member and the second rotating member is equal to or larger than the predetermined difference, execute first synchronization control of controlling rotational speed of the first motor (8) such that the rotational speed difference between the first rotating member and the second rotating member becomes smaller than the predetermined difference.

6. The hybrid vehicle control system according to claim 5, wherein the electronic control unit is configured to execute the first synchronization control when a driver operates an accelerator.

7. The hybrid vehicle control system according to claim 5, wherein the electronic control unit is configured to execute the first synchronization control based on an amount of change in a vehicle speed.

8. The hybrid vehicle control system according to any one of claims 1 to 4, wherein:
the differential mechanism (PL1) includes:
a first differential mechanism (37) including two rotating elements of the first rotating element (6), the second rotating element (7), and the third rotating element (9), and a first coupling element;
a second differential mechanism (40) including one rotating element other than the two rotating elements of the first rotating element (6), the second rotating element (7), and the third rotating element (9), a second coupling element coupled to the first coupling element, and another rotating element; and
the engaging mechanism including a first engaging mechanism and a second engaging mechanism, the first engaging mechanism being configured to selectively couple together one of the two rotating elements in the first differential mechanism (37) and the other rotating element in the second differential mechanism (40) and the second engaging mechanism being configured to selectively couple together any two rotating elements of the second differential mechanism (40); and
the mechanical neutral is set as the first engaging mechanism and the second engaging mechanism are disengaged.

9. The hybrid vehicle control system according to claim 8, wherein:
the electronic control unit is configured to set either a first HV travel mode in which the first engaging mechanism is engaged and the second engaging mechanism is disengaged, or a second HV travel mode in which the first engaging mechanism is disengaged and the second engaging mechanism is engaged;
the electronic control unit is configured to have different speed reduction ratios in the first HV travel mode and the second HV travel mode, the speed reduction ratio being a ratio of speed of the engine (2) to rotational speed of the driving wheel (3) in a state where rotation of the first motor (8) is stopped;
the electronic control unit is configured to detect that vehicle speed while the mechanical neutral is set is equal to or higher than a second predetermined vehicle speed;
the electronic control unit is configured to, when the vehicle speed is equal to or higher than the second predetermined vehicle speed, execute second synchronization control of controlling rotational speed of the first motor (8) such that a rotational speed difference between two rotating elements, engaged by one of the first engaging mechanism and the second engaging mechanism that is engaged to set one of the first HV travel mode and the second HV travel mode in which the speed reduction ratio is lower, becomes smaller than a second predetermined rotational speed;
the electronic control unit is configured to detect that vehicle speed while the mechanical neutral is set is lower than a third predetermined vehicle speed that is lower than the second predetermined vehicle speed; and
the electronic control unit is configured to, when the vehicle speed is lower than the third predetermined vehicle speed, execute third synchronization control of controlling the rotational speed of the first motor (8) such that a rotational speed difference between two rotating elements, engaged by the other one of the first engaging mechanism and the second engaging mechanism that is engaged to set the other one of the first HV travel mode and the second HV travel mode, becomes equal to or smaller than a third predetermined rotational speed.

10. The hybrid vehicle control system according to claim 9, wherein the electronic control unit is configured to execute either the second synchronization control or the third synchronization control when a driver operates an accelerator.
